# FASCICULE DE BREVET EUROPEEN

(11) **EP 0 684 340 B1**
(45) Date de publication et mention de la délivrance du brevet: **26.01.2000**
(21) Numéro de dépôt: 95201377.9
(22) Date de dépôt: 24.05.1995
(51) Int. Cl.: E01C 5/22, E04F 15/08

(54) **Procédé de fabrication d'éléments de revêtement découpés dans une dalle composité et élément de revêtement obtenu**
Herstellungsverfahren für aus einer zusammengesetzten Platte ausgeschnittene Belagselemente und Belagselement
Method for the production of covering elements obtained by cutting a multi-ply slab, and covering element

(30) Priorité: 27.05.1994 FR 9406718
(43) Date de publication de la demande: 29.11.1995
(73) Titulaire: COMPOSANTS TARNAIS BETON S.A., Société Anonyme, F-81150 Marssac sur Tarn (FR)
(72) Inventeur: Peauger, Régis, F-31180 Rouffiac Tolosan (FR); Vannier, Dominique, F-31000 Toulouse (FR)
(74) Mandataire: Cabinet BARRE LAFORGUE & associés

(56) Documents cités:
- EP-A- 0 053 092
- EP-A- 0 176 471
- EP-A- 0 197 844
- EP-A- 0 510 486
- WO-A-91/00402
- WO-A-91/05929
- DE-A- 4 134 373
- DE-U- 1 890 769
- FR-A- 1 524 275
- FR-A- 2 670 223
- US-A- 1 925 460

## Description

L'invention concerne un procédé de fabrication d'éléments composites de revêtement comprenant une couche de parement en matériau noble massif rigide associée à une sous-couche de contreparement en matériau composite apte à être mis en oeuvre par moulage et durcissant après sa mise en oeuvre, ainsi qu'un élément de revêtement ainsi obtenu (voir p.ex. le EP-A-0 053 092).

Des éléments de revêtement tels que des pavés ou des carreaux sont par exemple utilisés pour le revêtement de surfaces de voirie telles que les trottoirs ou les rues, ou les murs ou les sols de bâtiments. Ces éléments peuvent présenter des contours divers qui peuvent être carrés ou rectangulaires ou plus complexes. Ils doivent cependant être particulièrement esthétiques, de caractéristiques mécaniques appropriées à leur utilisation, et peu onéreux à fabriquer et à poser.

On connaît déjà des éléments de revêtement tels que des pavés en matériau massif, par exemple en granit. Ces éléments de revêtement présentent l'inconvénient d'un prix très élevé lié au prix du matériau utilisé. De plus, les pavés massifs généralement fabriqués par fendage présentent des formes irrégulières, ce qui nuit à l'esthétique du revêtement et augmente les coûts de pose compte tenu de la nécessité de faire appel à une main-d'oeuvre spécialisée.

On connaît également des pavés ou des dalles réalisés intégralement en béton brut massif. Dans ce cas, le coût du matériau est beaucoup plus faible, mais l'esthétique n'est pas satisfaisante. De plus, la fabrication de ces éléments est relativement onéreuse et n est pas appropriée à une fabrication sur mesure d'éléments de forme ou dimensions quelconques.

Pour remédier à ces différents inconvénients, on a déjà pensé à réaliser des éléments composites comprenant une couche externe de parement d'épaisseur aussi faible que possible en matériau noble massif rigide, associée à une sous-couche de contreparement en matériau composite tel qu'un béton. Un tel élément présenterait en effet à la fois l'avantage d'un prix matière raisonnable tout en conférant un aspect esthétique satisfaisant.

Ainsi, la demande de brevet européen EP-A-0.176.471 décrit un élément composite de revêtement formé d'une couche extérieure de matériau massif tel que de la pierre collée par un mortier sur une couche de support en béton. Selon ce document, le support de béton est appliqué à la couche extérieure à la main ou par une machine appropriée sur le chantier avant utilisation. De ce fait, l'économie réalisée par la matière est contrebalancée par le coût de main-d'oeuvre et par la faible productivité du procédé de fabrication. En effet, il est peu réaliste de penser qu'il est possible de mouler sur chantier chaque couche de support en béton de chaque pavé, puis de coller individuellement la couche de support en béton obtenue sur chaque couche externe de pierre préalablement découpée aux dimensions adéquates.

En conséquence et plus généralement, les éléments composites de revêtement proposés dans l'art antérieur n'ont pas été largement exploités dans la pratique compte tenu de la complexité et du prix de leur procédé de fabrication.

En outre, le problème se pose de la fiabilité de la liaison mécanique entre la couche de parement extérieure et la sous-couche de contreparement, et plus généralement des caractéristiques mécaniques de l'élément composite. Ce problème se pose de façon accrue dans le cas où l'élément de revêtement doit être utilisé en voirie (trottoirs, rues...). Pour résoudre ce problème, on a déjà pensé à ménager des rainures ou des perçages dans la couche de parement, ces rainures ou perçages recevant le mortier de liaison et/ou des saillies d'armatures noyées dans la sous-couche de béton. Néanmoins, là encore, le coût nécessaire pour réaliser ces rainures ou perçages grève le prix de fabrication de tels éléments.

L'invention vise donc à remédier à l'ensemble des inconvénients sus-mentionnés de l'art antérieur.

Ainsi, l'invention vise à proposer un procédé de fabrication d'éléments composites de revêtement présentant l'aspect esthétique d'un matériau noble massif, mais dont le prix global de fabrication et de pose est du même ordre que ou légèrement supérieur à celui d'éléments de revêtement constitués entièrement de béton.

L'invention vise également à proposer un procédé de fabrication grâce auquel l'aspect et la finition des éléments de revêtement est de très bonne qualité sans pour autant que le coût de fabrication soit augmenté.

L'invention vise également à proposer un procédé de fabrication permettant la fabrication d'éléments composites de revêtement dont la nature et la forme peuvent varier, et dont le prix est au moins sensiblement indépendant de la forme donnée aux éléments de revêtement.

Plus particulièrement, l'invention vise à proposer un procédé de fabrication permettant la préfabrication des éléments composites de revêtement selon un procédé industriel en grande quantité, mais qui permet néanmoins de donner aux éléments de revêtement une forme quelconque qui peut être définie à la demande et sur mesure en fonction de chaque chantier.

L'invention vise également à proposer un procédé de fabrication d'éléments composites de revêtement de résistance mécanique améliorée en compression et en cisaillement de façon économique.

L'invention vise également à proposer un élément composite de revêtement présentant un bon aspect esthétique et dont le prix de revient et de pose est faible, c'est-à-dire du même ordre de grandeur ou peu supérieur à celui d'éléments constitués entièrement de béton.

L'invention vise également à proposer un tel élément composite de revêtement dont les caractéristiques mécaniques sont améliorées, et notamment un élément de revêtement plus particulièrement destiné au revêtement de surfaces de voirie (trottoirs, rues...).

Pour ce faire, l'invention concerne un procédé de fabrication d'éléments composites de revêtement comprenant une couche de parement en matériau noble massif rigide associée à une sous-couche de contreparement en matériau apte à être mis en oeuvre par moulage et durcissant après sa mise en oeuvre, caractérisé en ce que :
- on part d'une plaque de parement dont les dimensions en largeur et/ou en longueur sont supérieures à celles des éléments à fabriquer,
- on moule et on associe une sous-couche de contreparement sur toute une face de la plaque de parement pour former une dalle composite de grandes dimensions,
- et on découpe la dalle composite perpendiculairement à son plan principal, après l'association de la sous-couche de contreparement à la plaque de parement, en une pluralité d'éléments de revêtement prêts à poser.

Avantageusement et selon l'invention, on découpe la dalle composite en au moins deux étapes distinctes dont une étape de prédécoupe lors de laquelle on réalise, à partir de la face externe libre de la sous-couche de contreparement moulée, un réseau d'entailles de prédécoupe de hauteur prédéterminée dans au moins une partie de l'épaisseur de la sous-couche de contreparement, de façon à prédécouper les éléments de revêtement.

Selon l'invention, on associe la sous-couche de contreparement à la plaque de parement par l'intermédiaire d'une couche de collage dont le temps de séchage est inférieur au temps de durcissement de la sous-couche de contreparement. Et on réalise l'étape de prédécoupe après le séchage de la couche de collage. Avantageusement et selon l'invention, on utilise une couche de collage constituée d'une colle comprenant un liant hydraulique et de l'eau.

En variante ou en combinaison, on associe la sous-couche de contreparement à la plaque de parement par l'intermédiaire de moyens mécaniques de fixation uniformément répartis en surface entre la plaque de parement et la sous-couche de contreparement, notamment sous la forme de happes d'ancrage associées rigidement -notamment rivetées- à la plaque d'ancrage avant le moulage et l'association de la sous-couche de contreparement.

L'invention concerne également un élément composite de revêtement obtenu par un procédé de fabrication selon l'invention. Et l'invention concerne un élément composite de revêtement tel qu'un pavé, un carreau..., comprenant une couche de parement en matériau noble massif rigide associée à une sous-couche de contreparement en matériau apte à être mis en oeuvre par moulage et durcissant après sa mise en oeuvre, caractérisé en ce que ses faces latérales et les arêtes vives de la couche de parement ont l'état de surface et l'aspect laissé par un outil de découpe tel qu'une scie, un jet d'eau sous pression ou un laser.

L'invention concerne en outre un procédé de fabrication et un élément composite de revêtement comprenant en combinaison tout ou partie des caractéristiques mentionnées ci-dessus ou ci-après.

D'autres caractéristiques et avantages de l'invention apparaîtront à la lecture de la description suivante qui se réfère aux figures annexées dans lesquelles :
- les figures 1 à 7 sont des vues partielles schématiques en perspective illustrant différentes étapes d'un procédé de fabrication selon l'invention,
- la figure 8 est une vue partielle en section transversale d'un dispositif pour la mise en oeuvre d'un procédé selon l'invention,
- la figure 9 est une vue partielle en coupe transversale d'une dalle composite prédécoupée obtenue lors d'un procédé de fabrication selon l'invention,
- la figure 10 est une vue en coupe transversale d'un élément composite de revêtement selon l'invention obtenu à partir de la dalle de la figure 9 par un procédé de fabrication selon l'invention,
- les figures 11 à 13 sont des vues en coupe transversale de variantes d'éléments composites selon l'invention obtenus par un procédé de fabrication selon l'invention.

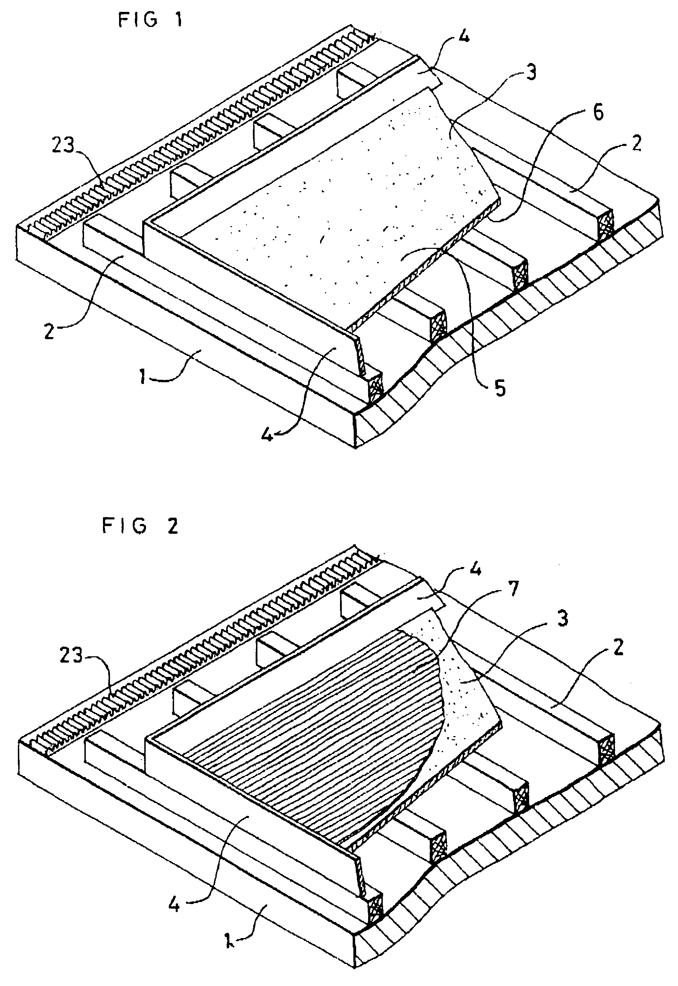

La figure 1 représente une table de travail 1 rigide sur laquelle on a disposé des liteaux 2 parallèles les uns les autres. Sur les liteaux 2, on pose une ou plusieurs plaques 3 de parement dont les dimensions en largeur et en longueur sont supérieures à celles des éléments composites de revêtement à fabriquer. On fixe ensuite aux liteaux 2, rigidement mais de façon amovible, des parois périphériques 4 de coffrage s'étendant tout autour de chacune des plaques 3. La hauteur des parois de coffrage 4 sur le pourtour de chaque plaque 3 de parement est constante et est définie en fonction de la hauteur voulue pour la sous-couche de contreparement 12 ultérieurement moulée dans le moule formé de la plaque de parement 3 qui fait office de fond de coffrage, et du coffrage périphérique 4. Sur les figures 1 à 7, la table de travail 1, les liteaux 2, la plaque de parement 3 et les parois de coffrage 4 ne sont représentés que partiellement pour plus de clarté.

La table de travail 1 utilisée peut être une table de grande longueur, par exemple d'une longueur de l'ordre de 100 mètres, et d'une largeur de l'ordre de 1 à 5 mètres. On pose alors une série de plaques 3 de parement en matériau noble massif, prédécoupées, ayant une largeur de l'ordre de 1 à 5 mètres et une longueur de l'ordre de 2 à 10 mètres le long de cette table de travail 1 sur les liteaux 2. On réalise un coffrage grâce à des parois 4 autour de chaque plaque 3.

Les plaques de parement 3 utilisées peuvent être constituées d'un matériau naturel tel que de la pierre naturelle, du granit, du marbre, du bois, etc... ou d'un matériau artificiel tel qu'un matériau synthétique, de la céramique, de l'émail... L'épaisseur de la plaque de parement 3 utilisée peut varier, par exemple entre 5 et 45 mm.

Avantageusement et selon l'invention, on utilise des plaques de parement 3 qui proviennent directement d'une étape de sciage d'un bloc massif du matériau concerné. En effet, on a constaté que l'état de surface résultant d'un sciage est suffisamment esthétique dans la majorité des cas du point de vue de l'aspect conféré à la face extérieure 6 de la plaque de parement 3, mais permet également d'améliorer de façon significative l'adhérence de la sous-couche de contreparement 12 et/ou d'une couche de collage 7 appliquée sur la face interne 5 de la plaque de parement 3. En variante néanmoins, on pourra réaliser une scarification par bouchardage ou flammage de la face intérieure 5 de la plaque de parement 3 destinée à recevoir la sous-couche de contreparement 12 et/ou la couche de collage.

Ainsi, chaque plaque de parement 3 est disposée au moins sensiblement horizontalement sur la table de travail 1 avec sa face externe 6 libre de parement orientée vers le bas.

Sur la figure 2, on a représenté l'étape ultérieure lors de laquelle on étend une couche de collage 7 sur la face intérieure 5 de la plaque de parement 3. Cette couche de collage 7 est constituée d'un matériau formant liant et/ou adhésif dont le temps de séchage est inférieur au temps de durcissement de la sous-couche de contreparement appliquée ultérieurement. Cette couche de collage 7 peut être constituée d'une colle comprenant un liant hydraulique et de l'eau, par exemple une couche de barbotine. Avantageusement et selon l'invention, on utilise une couche de barbotine 7 lorsque la sous-couche de contreparement 12 appliquée ultérieurement est constituée de béton.

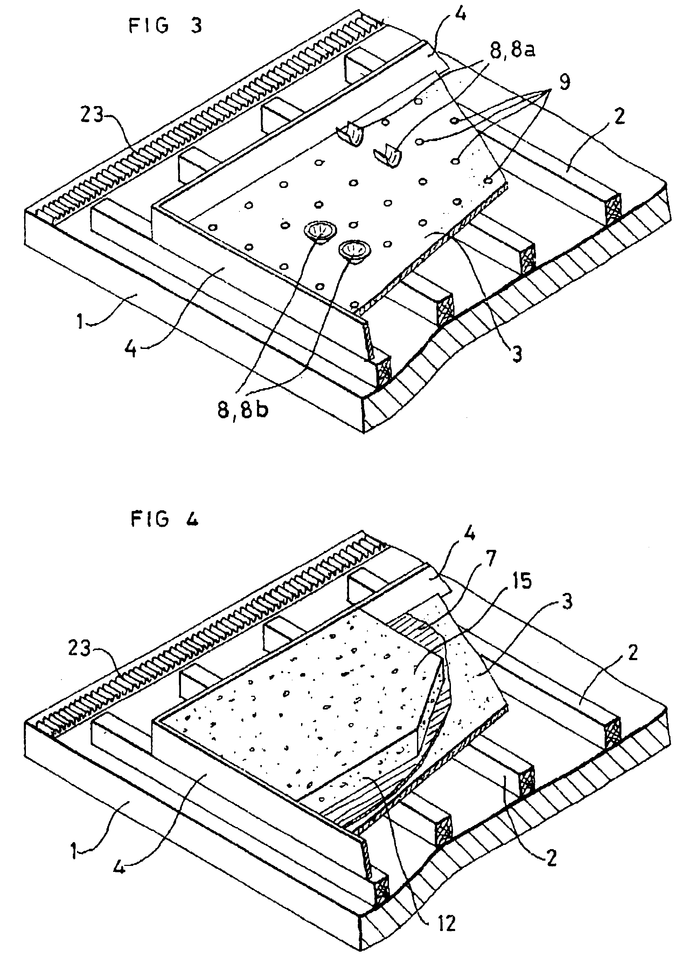

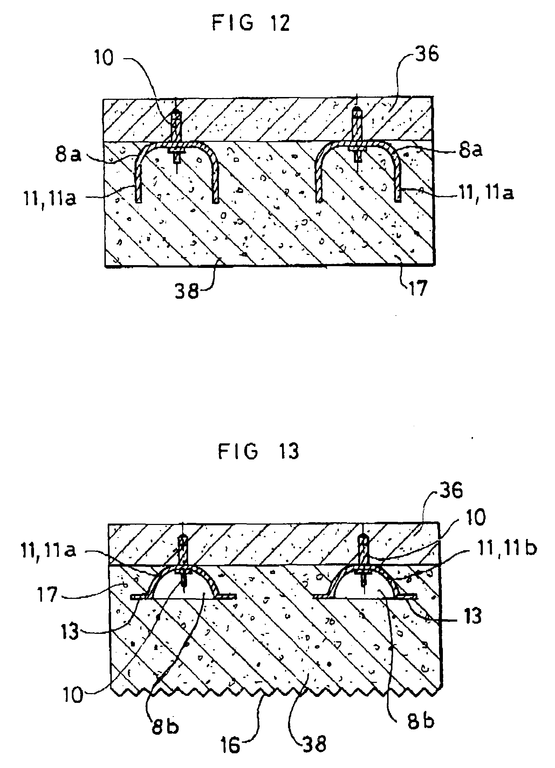

Sur la figure 3, on a représenté une variante de réalisation dans laquelle on associe la sous-couche de contreparement 12 à la plaque de parement 3 par l'intermédiaire de moyens 8 mécaniques de fixation uniformément répartis en surface entre la plaque de parement 3 et la sous-couche de contreparement 12 appliquée ultérieurement. Ces moyens 8 de fixation sont formés de happes d'ancrage 8a, 8b associées rigidement à la plaque 3 avant le moulage et l'association de la sous-couche de contreparement 12 et de façon à s'étendre au sein de la sous-couche de contreparement 12 lorsque celle-ci est montée sur la plaque 3. Les happes d'ancrage 8a, 8b sont rivetées dans des perçages 9 ménagés dans la plaque de parement 3 préalablement. Chaque happe d'ancrage 8a, 8b comporte un rivet 10, qui peut être un rivet à frapper ou un rivet par déformation, et qui est engagé dans un perçage 9 de la plaque de parement 3. Ce rivet 10 porte une platine d'ancrage 11 qui s'étend en saillie à partir de la plaque de parement 3 à l'intérieur de la sous-couche de contreparement 12 ultérieurement appliquée. Sur les figures 3, 12 et 13, on a représenté deux variantes de réalisation. Dans la première variante représentée (figures 3 et 12), la platine 11a est par exemple une portion de profilé à section droite transversale en forme de U et définit ainsi deux ailes parallèles qui s'étendent perpendiculairement à la plaque de parement 3 à l'intérieur de la sous-couche de contreparement 12. Dans la deuxième variante représentée (figures 3 et 13), la platine 11b de la happe d'ancrage 8b peut être formée d'une coupole hémisphérique 11b rivetée par son fond, et qui présente à sa portion la plus éloignée de la plaque de parement 3, une collerette 13 qui s'étend au moins sensiblement parallèlement à la face intérieure 5 de cette plaque de parement 3.

Bien évidemment, on peut utiliser en combinaison une couche de collage 7 et des moyens 8 mécaniques de fixation. Par exemple, on peut fixer des happes d'ancrage 8a ou 8b, puis étaler une couche de barbotine 7 sur la plaque de parement 3.

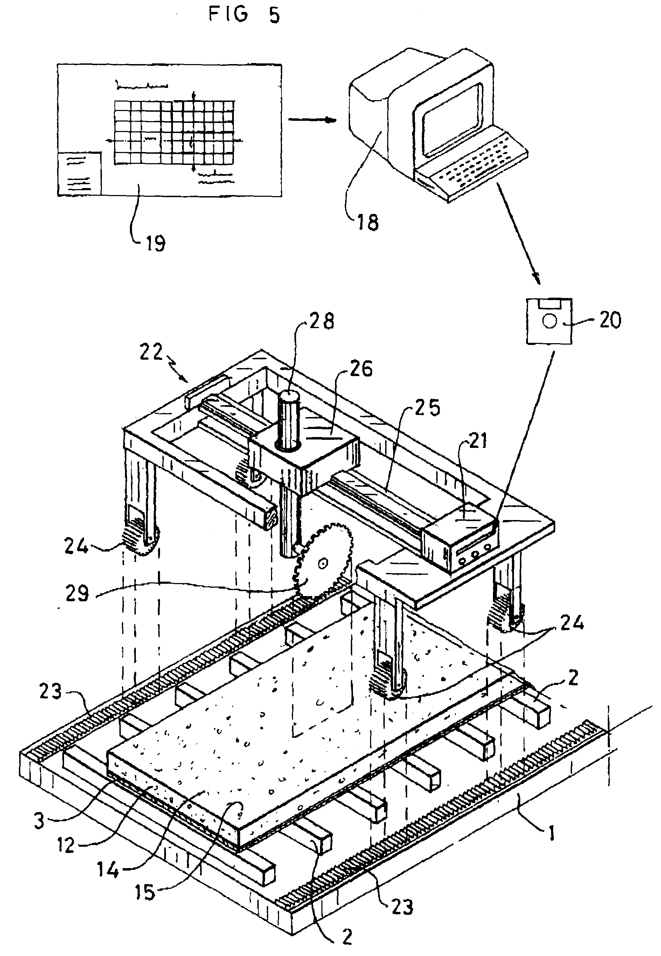

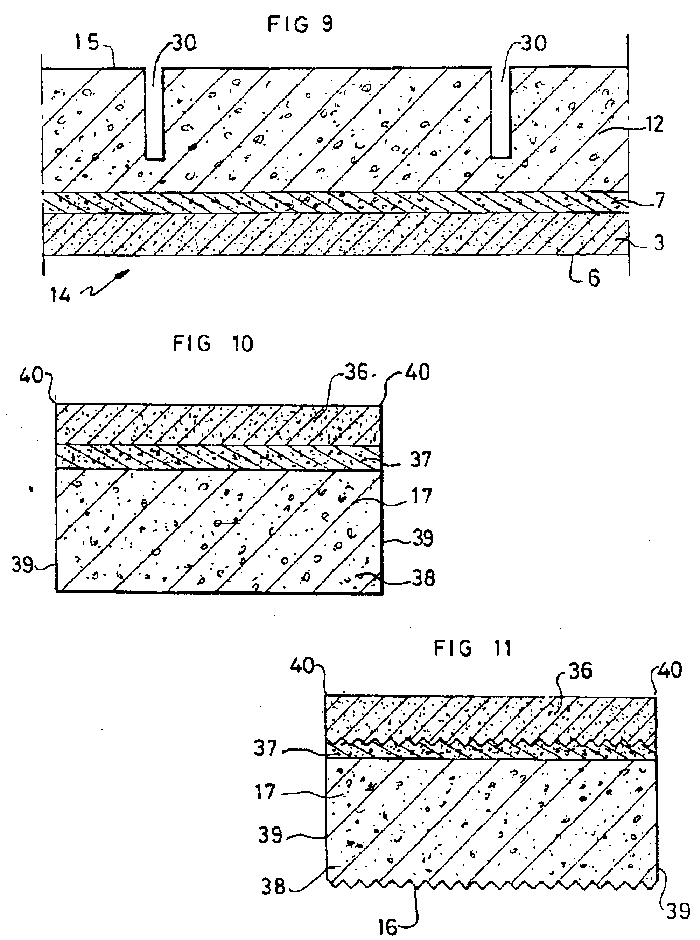

On termine la fabrication d'une dalle 14 composite de grandes dimensions (figure 4) en moulant et en associant une sous-couche de contreparement 12 sur toute la face intérieure 5 de la plaque de parement 3. Cette sous-couche de contreparement 12 est par exemple formée de béton frais, coulé directement à l'intérieur du moule formé par la plaque de parement 3 et les parois 4 de coffrage. Selon l'invention, on coule cette sous-couche de contreparement 12 avant que la couche de collage 7 ne soit durcie. La sous-couche de contreparement 12 est avantageusement constituée d'un béton, par exemple un béton de classe B60 ou de tout autre matériau -notamment un matériau composite- apte à être mis en oeuvre par moulage et durcissant après sa mise en oeuvre. Ce béton est ensuite vibré et arasé. Avantageusement, la face supérieure externe 15 de la sous-couche de contreparement 12 est ensuite rainurée, de façon à présenter des rainures 16 facilitant la pose ultérieure des éléments composites (figures 11 et 13). L'épaisseur de la sous-couche de contreparement 12 est supérieure à celle de la plaque de parement 3 qui est la plus faible possible compte tenu des contraintes mécaniques et des impératifs de fabrication et de manutention. La sous-couche de contreparement 12 peut être en matériau armé, précontraint, en béton fibré ou incorporant des adjuvants divers, en matériau à base de matière synthétique composite ou non composite, chargée ou non... Le matériau est choisi en fonction des propriétés mécaniques recherchées et de son coût.

Chaque dalle 14 composite ainsi réalisée est ensuite découpée perpendiculairement à son plan principal, en une pluralité d'éléments 17 composites de revêtement prêts à poser.

La figure 5 représente schématiquement l'installation utilisée pour découper la dalle composite 14 en éléments 17. On peut par exemple utiliser une installation et un procédé décrits dans le document EP-A-0.197.844 en remplaçant la buse de traçage de ce document par un outil de découpe.

On saisit sur un ordinateur 18 les dimensions, les formes et la disposition des éléments composites 17, par exemple à partir d'un plan 19. A partir de cet ordinateur 18 programmé de façon appropriée et connue en soi par un logiciel ou un progiciel de dessin assisté par ordinateur (par exemple du type AUTOCAD, marque déposée) et/ou de gestion de production assistée par ordinateur, on établit un calepinage des éléments à fabriquer, et on prépare une mémoire de masse amovible telle qu'une disquette 20 sur laquelle sont mémorisées les données permettant de tracer et de réaliser la découpe de chaque dalle 14 composite de grandes dimensions en éléments 17. Cette disquette 20 est directement utilisée par un automate 21 équipé d'un système informatique et programmé également de façon connue en soi pour commander le fonctionnement d'un robot de découpe 22. Les données mémorisées sur la mémoire amovible 20 comportent en particulier les fiches de fabrication de chaque élément de revêtement à fabriquer, et le nombre des éléments de mêmes formes et dimensions. Ces données sont formatées par l'ordinateur 18 sur la mémoire 20 pour être directement utilisables par le logiciel de l'automate 21. L'automate 21 et son logiciel sont par exemple du type de ceux commercialisés par la Société MERLIN GERIN (Meylan, France). Le logiciel de l'automate 21 permet d'optimiser les opérations et déplacements de l'outil de découpe en minimisant les chutes. Ce robot de découpe 22 est par exemple formé d'un chariot qui roule longitudinalement sur des crémaillères 23 longitudinales s'étendant de chaque côté de la table 1. Le chariot porte alors des roues 24 dentées motorisées par un dispositif de motorisation porté par le chariot, connu en soi et non représenté. De la sorte, le robot 22 peut se déplacer sous la commande de l'automate 21 le long de la table de travail 1. Le robot 22 peut aussi être repéré par un dispositif de repérage optique connu en soi. Par ailleurs, le chariot du robot 22 comporte une poutre transversale 25 sur laquelle un porte-outil 26 peut se déplacer en translation transversale sous la commande de l'automate 21. La poutre 25 transversale porte par exemple un rail à crémaillère sur lequel des roues dentées du porte-outil 26 viennent rouler. Ces roues dentées sont motorisées par un moteur 27 commandé par l'automate 21. Le porte-outil 26 comporte un bras 28 s'étendant verticalement vers le bas et portant l'outil de découpe qui est, dans l'exemple représenté, une scie circulaire diamantée rotative 29 entraînée en rotation par une transmission appropriée à travers le bras 28 grâce à un moteur. Le bras 28 a également sa position relative par rapport au porte-outil 26 qui peut être réglée sous le contrôle de l'automate 21 ou manuellement. Par exemple, le bras 28 peut au moins subir une rotation, notamment de 90° autour de son axe vertical de façon à pouvoir placer la scie 29 soit dans la direction longitudinale de la table 1 parallèlement aux crémaillères 23 sur lesquelles le chariot roule, soit perpendiculairement à cette direction, c'est-à-dire transversalement à la table 1, soit dans toute position intermédiaire.

Sur la figure 5, la dalle composite 14 est représentée, et on a ôté les parois 4 de coffrage avant de procéder à la découpe. Lorsque l'outil de découpe utilisé est un jet d'eau sous pression ou un laser, les parois 4 de coffrage peuvent être laissées en place lors de l'étape de découpe, notamment lors de l'étape de prédécoupe décrite ci-après.

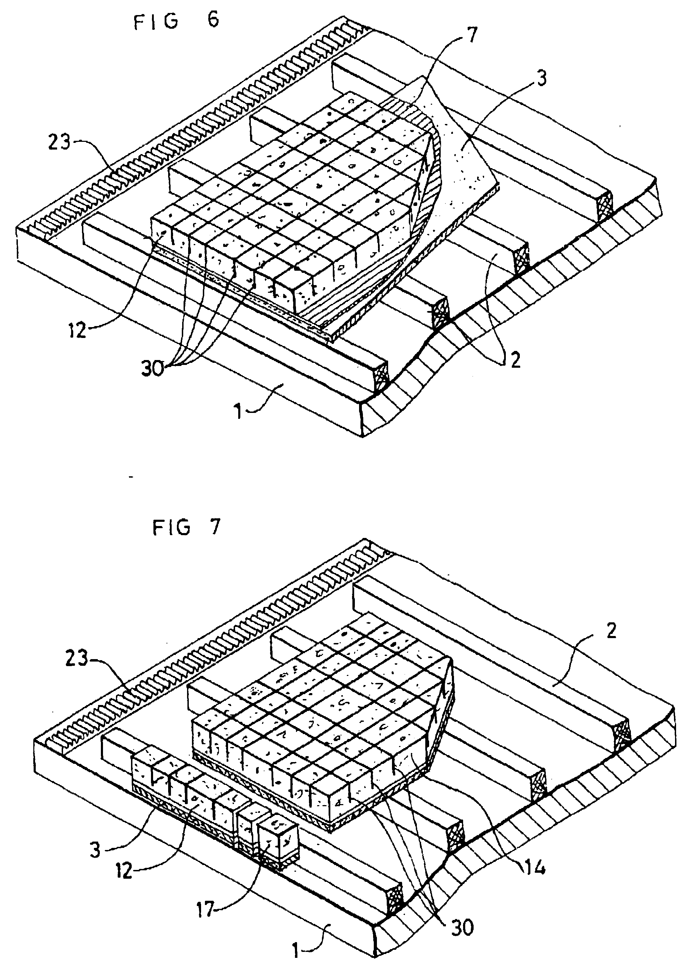

Selon l'invention, on découpe la dalle 14 composite en au moins deux étapes distinctes dont une étape de prédécoupe qui est représentée à la figure 6. Dans cette étape de prédécoupe, on réalise, à partir de la face externe libre 15 de la sous-couche de contreparement 12 moulée, un réseau d'entailles de prédécoupe 30 continues de hauteur prédéterminée dans au moins une partie de l'épaisseur de la sous-couche de contreparement 12, de façon à prédécouper les éléments de revêtement 17. Dans les exemples représentés, le réseau d'entailles de prédécoupe 30 est en forme de quadrillage. Néanmoins, il est à noter que l'invention permet la fabrication d'éléments 17 de contours quasiment quelconques. Le réseau peut donc présenter un maillage quelconque et même être irrégulier. Cette étape de prédécoupe est réalisée avant la fin du durcissement de la sous-couche de contreparement 12, mais de préférence après le durcissement de la couche de collage 7. On réalise des entailles 30 de prédécoupe dont la hauteur est inférieure à l'épaisseur de la sous-couche de contreparement 12 de façon à ne pas entamer la couche de collage 7, mais supérieure à la moitié de cette épaisseur. On laisse par exemple une épaisseur de 0,3 à 2 cm entre le fond des entailles 30 et la couche de collage 7. Après l'étape de prédécoupe, on attend la fin du durcissement de la sous-couche de contreparement 12, puis on effectue une étape de découpe finale lors de laquelle on découpe et on sépare les éléments de revêtement 17 en coupant l'épaisseur résiduelle de la dalle composite 14 laissée entre le fond des entailles 30 de prédécoupe et la face externe libre 6 de la plaque de parement 3. Dans l'étape de découpe finale représentée à la figure 7 et effectuée sur la même installation (figure 5) que l'étape de prédécoupe, on engage un outil de coupe 29 dans les entailles 30 de prédécoupe qui servent de guide à l'outil 29 lors de l'étape de découpe finale. L'étape de prédécoupe est effectuée avec le même outillage et la même installation que l'étape de découpe finale. Néanmoins, entre ces deux étapes, il est possible de manutentionner les dalles 14 composites, par exemple pour accélérer le durcissement de la sous-couche de contreparement 12 en procédant à un étuvage ou autre. Bien évidemment, les dalles composites 14 sont fixées rigidement sur la table de travail 12 sur laquelle le robot 22 de découpe se déplace, et ce aussi bien avant l'étape de prédécoupe qu'avant l'étape de découpe finale. Et chaque dalle composite 14 est fixée sur la table 1 dans une position prédéterminée précise et repérée.

La figure 9 représente un exemple de réalisation des entailles 30 de prédécoupe, c'est-à-dire un détail de la section de la dalle composite 14 représentée à la figure 6.

Il est à noter que la prédécoupe dans la sous-couche de contreparement 12 non encore durcie est une étape facile à réaliser avec un outil standard, tel qu'une scie diamantée. L'étape de prédécoupe et l'étape de découpe finale peuvent également être effectuées par une découpe au jet d'eau sous pression. Dans ce cas, on pourra utiliser un jet d'eau de faible puissance (par exemple sous une pression de moins de 100 bars). Après le durcissement de la sous-couche de contreparement 12, il ne reste à découper qu'une faible épaisseur de matériau dur. C'est la raison pour laquelle on pourra utiliser dans l'étape de découpe finale la même installation de découpe, et notamment la même table de travail 1 et le même robot 22 de découpe que pour l'étape de prédécoupe, à savoir une scie diamantée standard ou un jet d'eau de faible puissance. En variante, on peut aussi utiliser un laser de découpe.

Il est à noter que l'étape de prédécoupe peut être effectuée rapidement si l'on utilise une couche de collage 7 à séchage rapide et/ou des moyens 8 mécaniques de fixation.

On peut aussi bien évidemment ne pas utiliser la même installation pour réaliser l'étape de prédécoupe et l'étape de découpe finale.

Dans le mode de réalisation représenté sur les figures 1 à 7, on a utilisé la même table de travail 1 pour fabriquer les dalles composites 14, puis pour les découper en éléments 17. Ainsi, la table de travail 1 sur laquelle on fabrique la dalle composite 14 de grandes dimensions forme le support d'une installation de découpe, de sorte qu'au moins une étape de découpe peut être effectuée sans manutention de la dalle 14 composite après sa fabrication. On peut ainsi fabriquer un grand nombre d'éléments 17 sans manutention spécifique des dalles 14 au cours du procédé.

En variante, on peut aussi fabriquer les dalles composites 14 sur une table standard simplement constituée d'un plan horizontal supportant les liteaux 2, puis manutentionner les dalles 14 vers une installation de découpe distincte. Cette deuxième variante permet de faciliter les étapes ultérieures d'emballage, de conditionnement et de transport des éléments 17 fabriqués.

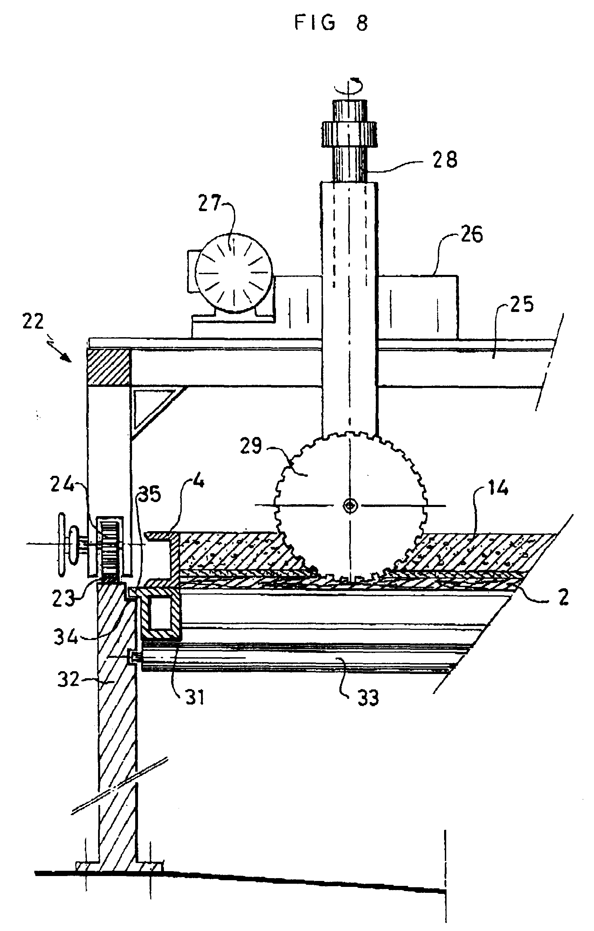

Sur la figure 8, on a représenté une installation permettant de mettre en oeuvre cette deuxième variante. Chaque dalle 14 composite est préparée sur un châssis métallique 31 portant des panneaux de bois composite ou des liteaux 2 et un coffrage périphérique 4 métallique amovible.

Ces châssis 31 sont montés amovibles sur un bâti 32 de l'installation de découpe, grâce à des rouleaux 33 transversaux montés sur le bâti 32. Le bâti 32 porte également les crémaillères 23 longitudinales sur lesquelles le robot de découpe 22 roule. Le bâti 32 définit également des épaulements de support 34 longitudinaux recevant une cornière longitudinale 35 du châssis 31 portant la dalle 14.

Chaque châssis 31 peut donc être placé sur le bâti 32 en le faisant rouler sur les rouleaux 33, et est ensuite fixé rigidement par rapport au bâti 32 par tout moyen approprié (boulons, brides ...). Lorsque l'étape de prédécoupe ou de découpe est terminée, on peut aisément ôter le châssis 31 qui porte la dalle 14 pour lui faire subir une autre étape et utiliser l'installation pour traiter une autre dalle 14 portée par un autre châssis 31.

Les figures 10 à 13 représentent des exemples d'éléments composites 17 selon l'invention obtenus par un procédé selon l'invention. Ces éléments composites 17 peuvent être utilisés en éléments de revêtement vertical ou horizontal, porteurs ou non. On peut ainsi fabriquer des pavés, des dalles de voirie, des dalles de bardage, des carreaux... Ces éléments 17 composites sont plans. Néanmoins, le procédé et l'invention sont aussi applicables pour fabriquer des éléments non plans tels que des bordures de trottoir, des nez de marche, des éléments de mobilier urbain, des éléments porteurs tels que des moellons... Il suffit en effet d'utiliser une ou plusieurs plaques 3 de parement de forme appropriée.

Par ailleurs, il est à noter que chaque dalle composite 14 peut être découpée en éléments 17 de forme géométrique quelconque, notamment si on utilise une découpe au jet d'eau ou au laser. Les formes les plus complexes peuvent être envisagées. Et il n'est pas nécessaire de réaliser un coffrage ou un moule pour chaque élément 17 de revêtement à fabriquer.

L'élément 17 comprend donc une couche de parement 36 formée d'une portion de la plaque de parement 3 initialement utilisée pour préparer une dalle 14. Cette couche de parement 36 est en matériau noble massif rigide et présente donc une face externe esthétique décorative. La couche de parement 36 est associée rigidement à une sous-couche de contreparement 38 qui est une portion de la sous-couche de contreparement 12 réalisée sur la plaque 3 de parement par le procédé selon l'invention. La sous-couche de contreparement 38 est donc réalisée en matériau composite apte à être mise en oeuvre par moulage et durcissant après sa mise en oeuvre. La couche de parement 36 est associée rigidement à la sous-couche de contreparement 38 par l'intermédiaire d'une couche de collage 37 qui est une portion de la couche de collage 7 ou par l'intermédiaire des moyens 8 mécaniques de fixation. L'élément composite 17 a ses faces latérales 39 et les arêtes vives 40 de la couche de parement 36 à la jonction de ces faces latérales 39 qui ont un état de surface et un aspect laissé par un outil de découpe tel qu'une scie, un jet d'eau sous pression ou un laser. Ces faces latérales 39 et ces arêtes 40 sont donc parfaitement régulières et lisses et présentent donc un aspect amélioré.

Sur les figures 10 et 11, on a représenté la variante dans laquelle l'élément composite comprend une couche de collage 37 qui est donc une portion de la couche de collage 7 d'une dalle 14. Dans la variante de la figure 11, la face intérieure de la couche de parement 36 est rainurée ou scarifiée pour faciliter la liaison entre cette couche de parement 36 et la couche de collage 37.

Sur les figures 12 et 13, on a représenté la variante dans laquelle on utilise des happes d'ancrage 8a, 8b fixées ancrées -notamment rivetées- dans la couche de parement 36 et s'étendant au sein de la sous-couche de contreparement 38. Sur les figures 11 et 13, on a également représenté des rainures 16 ménagées sur la surface externe inférieure de la sous-couche de contreparement 38 et qui facilitent la pose de l'élément 17.

Ainsi, on peut fabriquer à moindre coût, sans coffrage individuel, très rapidement et en grande quantité, des éléments de revêtement présentant l'aspect du matériau massif (pierre, marbre, granit, ...), ayant un contour géométrique précis, régulier et quelconque. Il est à noter en particulier que ce contour est plus régulier que celui obtenu pour des pavés massifs fabriqués traditionnellement par fendage.

Il est possible de préparer à l'avance un stock de dalles 14 de grandes dimensions que l'on découpe ensuite à la demande et sur mesure en un grand nombre d'éléments 17 de revêtement extrêmement rapidement et de façon économique.

## Revendications

1. Procédé de fabrication d'éléments (17) composites de revêtement comprenant une couche de parement (36) en matériau noble massif rigide associée à une sous-couche de contreparement (38) en matériau apte à être mis en oeuvre par moulage et durcissant après sa mise en oeuvre, caractérisé en ce que :
- on part d'une plaque de parement (3) dont les dimensions en largeur et/ou en longueur sont supérieures à celles des éléments (17) à fabriquer,
- on moule et on associe une sous-couche de contreparement (12) sur toute une face de la plaque de parement (3) pour former une dalle (14) composite de grandes dimensions,
- et on découpe la dalle (14) composite perpendiculairement à son plan principal, après l'association de la sous-couche de contreparement (12) à la plaque de parement (3), en une pluralité d'éléments (17) de revêtement prêts à poser.

2. Procédé selon la revendication 1, caractérisé en ce qu'on découpe la dalle (14) composite en au moins deux étapes distinctes dont une étape de prédécoupe lors de laquelle on réalise, à partir de la face externe libre (6) de la sous-couche de contreparement (12) moulée, un réseau d'entailles de prédécoupe (30) de hauteur prédéterminée dans au moins une partie de l'épaisseur de la sous-couche de contreparement (12) de façon à prédécouper les éléments (17) de revêtement.

3. Procédé selon la revendication 2, caractérisé en ce qu'on réalise l'étape de prédécoupe avant la fin du durcissement de la sous-couche de contreparement (12).

4. Procédé selon l'une des revendications 2 et 3, caractérisé en ce qu'on réalise des entailles (30) de prédécoupe dont la hauteur est inférieure à l'épaisseur de la sous-couche de contreparement (12), mais supérieure à la moitié de cette épaisseur.

5. Procédé selon l'une des revendications 2 à 4, caractérisé en ce qu'après l'étape de prédécoupe, on attend la fin du durcissement de la sous-couche de contreparement (12), puis on effectue une étape de découpe finale lors de laquelle on découpe les éléments de revêtement (17) en coupant l'épaisseur résiduelle de la dalle composite (14) laissée entre le fond des entailles (30) de prédécoupe et la face externe libre (6) de la plaque de parement (30).

6. Procédé selon la revendication 5, caractérisé en ce que dans l'étape de découpe finale, on engage un outil de coupe (29) dans les entailles (30) de prédécoupe qui servent de guide à cet outil (29).

7. Procédé selon l'une des revendications 1 à 6, caractérisé en ce que l'on fabrique la dalle (14) composite sur un support (1) d'une installation de découpe, de sorte qu'au moins une étape de découpe peut être effectuée sans manutention de la dalle (14) composite après sa fabrication.

8. Procédé selon l'une des revendications 1 à 7, caractérisé en ce qu'au moins une étape de découpe de la dalle (14) composite est effectuée par sciage.

9. Procédé selon l'une des revendications 1 à 8, caractérisé en ce qu'au moins une étape de découpe de la dalle (14) composite est effectuée par découpe au jet d'eau sous pression ou au laser.

10. Procédé selon l'une des revendications 2 à 9, caractérisé en ce que l'étape de prédécoupe est effectuée avec la même installation de découpe (1, 22) que l'étape de découpe finale.

11. Procédé selon l'une des revendications 1 à 10, caractérisé en ce qu'on dispose la plaque de parement (3) au moins sensiblement horizontalement sur un support (1) avec sa face externe (6) libre de parement orientée vers le bas, on réalise un coffrage périphérique (4) autour de la plaque de parement (3), et en ce que l'on coule et on moule la sous-couche de contreparement (12) dans le moule formé de la plaque de parement (3) faisant office de fond de coffrage, et du coffrage périphérique (4).

12. Procédé selon l'une des revendications 1 à 11, caractérisé en ce que l'on associe la sous-couche de contreparement (12) à la plaque de parement (3) par l'intermédiaire d'une couche de collage (7) dont le temps de séchage est inférieur au temps de durcissement de la sous-couche de contreparement (12).

13. Procédé selon la revendication 12, caractérisé en ce qu'on réalise l'étape de prédécoupe après séchage de la couche de collage (7).

14. Procédé selon l'une des revendications 12 et 13, caractérisé en ce qu'on utilise une couche de collage (7) constituée d'une colle comprenant un liant hydraulique et de l'eau.

15. Procédé selon l'une des revendications 12 à 14, caractérisé en ce que la sous-couche de contreparement (12) est en béton et en ce que la couche de collage (7) est une couche de barbotine.

16. Procédé selon l'une des revendications 1 à 15, caractérisé en ce que l'on associe la sous-couche de contreparement (12) à la plaque de parement (3) par l'intermédiaire de moyens (8) mécaniques de fixation uniformément répartis en surface entre la plaque de parement (3) et la sous-couche de contreparement (12).

17. Procédé selon la revendication 16, caractérisé en ce que les moyens (8) mécaniques de fixation sont formés de happes d'ancrage (8a, 8b) associées rigidement à la plaque d'ancrage (3) avant le moulage et l'association de la sous-couche de contreparement (12).

18. Procédé selon la revendication 17, caractérisé en ce que les happes d'ancrage (8a, 8b) sont rivetées dans des perçages (9) ménagés dans la plaque de parement (3).

19. Elément composite de revêtement tel qu'un pavé, un carreau..., comprenant une couche de parement (36) en matériau noble massif rigide associée à une sous-couche de contreparement (38) en matériau apte à être mis en oeuvre par moulage et durcissant après sa mise en oeuvre, caractérisé en ce que ses faces latérales (39) et les arêtes vives (40) de la couche de parement (36) ont l'état de surface et l'aspect laissé par un outil de découpe tel qu'une scie, un jet d'eau sous pression ou un laser.

20. Elément selon la revendication 19, caractérisé en ce que la sous-couche de contreparement (38) est associée à la couche de parement (36) grâce à au moins une happe d'ancrage (8a, 8b) fixée ancrée dans la couche de parement (36) et s'étendant au sein de la sous-couche de contreparement (38).

21. Elément selon la revendication 20, caractérisé en ce que chaque happe d'ancrage (8a, 8b) est rivetée dans un perçage (9) correspondant de la couche de parement (36).

## Patentansprüche

1. Verfahren zur Herstellung von kompositen Belagselementen (17), die eine Ansichtsflächenschicht (36) aus massivem, edlem Material, die starr mit einer unteren Schicht einer Gegenansichtsfläche (38) verbunden ist, die aus einem Material besteht, das angepasst ist, um durch Formguß und Aushartung nach seiner Bearbeitung hergestellt zu werden, dadurch gekennzeichnet ist, dass:
ausgehend von einer Ansichtsflächenplatte (3), deren Dimensionen in der Breite und/oder der Länge größer sind als diejenigen des herzustellenden Elements (17),
eine untere Schicht einer Gegenansichtsfläche (12) auf eine gesamte Fläche der Ansichtsflächenplatte (3) gegossen und mit ihr verbunden wird, um eine Kompositplatte (14) von großen Ausmaßen zu bilden,
die Kompositplatte (14) im rechten Winkel zu ihrer Hauptfläche nach der Verbindung der unteren Schicht der Gegenansichtsfläche (12) mit der Ansichtsflächenplatte (3) in eine Vielzahl zum Verlegen bereiter Belagselemente (17) zerschneidet wird.

2. Verfahren gemäß Anspruch 1, dadurch gekennzeichnet, dass die Kompositplatte (14) in mindestens zwei getrennten Stufen zerschneidet wird, wobei bei einer Vorschnittstufe, ausgehend von der äußeren, freien Fläche (6) der gegossenen, unteren Schicht der Gegenansichtsfläche (12), ein Netz von Vorschnittschlitzen (30) von einer vorbestimmten Tiefe in mindestens einem Teil der Stärke der unteren Schicht der Gegenansichtsfläche (12) hergestellt wird, um die Belagselemente (17) vorzuschneiden.

3. Verfahren gemäß Anspruch 2, dadurch gekennzeichnet, dass die Vorschnittstufe vor dem Ende der Aushärtung der unteren Schicht der Gegenansichtsfläche (12) durchgeführt wird.

4. Verfahren gemäß einem der Ansprüche 2 und 3, dadurch gekennzeichnet, dass die Vorschnittschlitze (30) mit einer Tiefe hergestellt werden, die geringer ist als die Dicke der unteren Schicht der Gegenansichtsfläche (12), aber höher ist als die Hälfte dieser Dicke.

5. Verfahren gemäß einem der Ansprüche 2 bis 4, dadurch gekennzeichnet, dass nach der Vorschnittstufe, wenn das Ende der Aushärtung der unteren Schicht der Gegenansichtsfläche (12) erreicht wird, dann eine Endschnittstufe durchgeführt wird, bei der die Belagselemente (17) geschneidet werden, indem die verbliebene Dicke der Kompositplatte (14) durchgetrennt wird, die zwischen dem Grund der Vorschnittschlitze (30) und der äußeren, freien Fläche (6) der Ansichtsflächenplatte (3) gelassen wurde.

6. Verfahren gemäß Anspruch 5, dadurch gekennzeichnet, dass in der Endschnittstufe ein Schneidewerkzeug (29) in den Vorschnittschlitzen (30), die als Führung des Werkzeugs (29) dienen, eingesetzt wird.

7. Verfahren gemäß einem der Ansprüche 1 bis 6, dadurch gekennzeichnet, dass die Kompositplatte (14) auf einer Halterung (1) einer Schneideinstallation hergestellt wird und zwar solcherart, dass mindestens eine Schnittstufe ohne einen Transport der Kompositplatte (14) nach ihrer Erzeugung durchgeführt werden kann.

8. Verfahren gemäß einem der Ansprüche 1 bis 7, dadurch gekennzeichnet, dass mindestens eine Schnittstufe der Kompositplatte (14) durch Sägen durchgeführt wird.

9. Verfahren gemäß einem der Ansprüche 1 bis 8, dadurch gekennzeichnet, dass mindestens eine Schnittstufe der Kompositplatte (14) durch Druckwasserstrahl oder Laser durchgeführt wird.

10. Verfahren gemäß einem der Ansprüche 2 bis 9, dadurch gekennzeichnet, dass die Stufe des Vorschnittes mit derselben Schneideinstallation (1, 22) durchgeführt wird wie die Endschnittstufe.

11. Verfahren gemäß einem der Ansprüche 1 bis 10, dadurch gekennzeichnet, dass die Ansichtsflächenplatte (3) mindestens ungefähr horizontal mit ihrer äußeren, freien Fläche (6) nach unten ausgerichtet auf der Halterung (1) angebracht wird und dass eine periphere Einschalung (4) um die Ansichtsflächenplatte (3) herum hergestellt wird, wobei die untere Schicht der Gegenansichtsfläche (12) darauf in der durch die als Einschalungsboden dienende Ansichtsflächenplatte (3) und der peripheren Einschalung (4) gebildeten Form gegossen und geformt wird.

12. Verfahren gemäß einem der Ansprüche 1 bis 11, dadurch gekennzeichnet, dass die untere Schicht der Gegenansichtsfläche (12) mit der Ansichtsflächenplatte (3) mittels des Zwischenmittels einer Klebeschicht (7) verbunden wird, deren Trocknungszeit kürzer ist als die Aushärtungszeit der unteren Schicht der Gegenansichtsfläche (12).

13. Verfahren gemäß Anspruch 12, dadurch gekennzeichnet, dass die Stufe des Vorschnittes nach der Trocknung der Klebeschicht (7) durchgeführt wird.

14. Verfahren gemäß einem der Ansprüche 12 und 13, dadurch gekennzeichnet, dass eine Klebeschicht (7) benutzt wird, die aus einem Kleber besteht, der ein hydraulisches Bindemittel und Wasser enthält.

15. Verfahren gemäß einem der Ansprüche 12 bis 14, dadurch gekennzeichnet, dass die untere Schicht der Gegenansichtsfläche (12) aus Beton ist und dass die Klebeschicht (7) eine Schicht von Schlicker ist.

16. Verfahren gemäß einem der Ansprüche 1 bis 15, dadurch gekennzeichnet, dass die untere Schicht der Gegenansichtsfläche (12) mit der Ansichtsflächenplatte (3) mittels mechanischer Fixiermitteln (8) verbunden wird, die gleichmäßig auf der Oberfläche zwischen der Ansichtsflächenplatte (3) und der unteren Schicht der Gegenansichtsfläche (12) verteilt sind.

17. Verfahren gemäß Anspruch 16, dadurch gekennzeichnet, dass die mechanischen Fixiermittel (8) als Verankerungsorganen (8a, 8b) ausgebildet sind, die vor der Formung und der Verbindung der unteren Schicht der Gegenansichtsfläche (12) starr mit der Verankerungsplatte (3) verbunden sind.

18. Verfahren gemäß Anspruch 17, dadurch gekennzeichnet, dass die Verankerungsorgane (8a, 8b) in Bohrungen (9) vernietet sind, die in der Ansichtsflächenplatte (3) angebracht wurden.

19. Komposites Belagselement wie ein Pflasterstein, eine Fliese ..., dass eine Ansichtsflächenschicht (36) aus massivem, edlem Material umfasst, die starr mit einer Gegenansichtsfläche (38) aus einem Material, das angepasst ist, um durch Formguss hergestellt zu werden und nach der Herstellung auszuhärten, dadurch gekennzeichnet, dass seine seitlichen Flächen (39) und die scharfen Kanten (40) der Ansichtsflächenschicht (36) in einem Oberflächenzustand sind und den Anblick bieten, wie er durch ein Schnittwerkzeug wie eine Säge, durch Druckwasserstrahl oder Laser hinterlassen wurde.

20. Element gemäß Anspruch 19, dadurch gekennzeichnet, dass die untere Schicht der Gegenansichtsfläche (38) mit der Ansichtsflächenschicht (36) mit Hilfe von mindestens einem Verankerungsorgan (8a, 8b) verbunden wird, die in der Ansichtsflächenschicht (36) fixiert und verankert ist und die sich innerhalb der unteren Schicht der Gegenansichtsfläche (38) erstreckt.

21. Element gemäß Anspruch 20, dadurch gekennzeichnet, dass jedes Verankerungsorgan (8a, 8b) in einer der Ansichtsflächenschicht (36) entsprechenden Bohrung (9) vernietet wird.

## Claims

1. Method for the production of composite coating elements (17) containing a facing layer (36) in a noble rigid solid material associated with a counterfacing underlayer (38) in a material able to be implemented by molding and hardening after the implementation thereof, characterized in that:
- starting from a facing plate (3) of which the dimensions in width and/or in length are larger than those of the elements (17) to be produced,
- an counterfacing underlayer (12) is cast on, and associated with, a whole face of the facing plate (3) to form a composite tile (14) of large dimensions,
- and the composite tile (14) is cut perpendicularly to the main plan thereof, after the association of the counterfacing underlayer (12) with the facing plate (3), in a plurality of facing elements (17) ready to be placed.

2. Method according to claim 1, characterized in that the composite tile (14) is cut in at least two distinct steps, of which one precutting step during which a network of precut notches (30) of predetermined height is realized from the free external face (6) of the counterfacing underlayer (12) cast in at least a portion of the thickness of the counterfacing underlayer (12) in order to precut the facing elements (17).

3. Method according to claim 2, characterized in that the precutting step is realized before the end of the hardening of the counterfacing underlayer (12).

4. Method according to one of claims 2 and 3, characterized in that some precut notches (30) are realized, the height of which is lower than the thickness of the counterfacing underlayer (12), but higher than half of this thickness.

5. Method according to one of claims 2 to 4, characterized in that after the precutting step, when the hardening of the counterfacing underlayer (12) is completed, a final cutting step is realized during which the elements of coating (17) are cut while cutting the remaining thickness of the composite tile (14) left between the bottom of the precut notches (30) and the free external face (6) of the facing plate (3).

6. Method according to claim 5, characterized in that in the final cutting step, a cutting tool (29) is engaged in the precut notches (30) that act as guide for said tool (29).

7. Method according to one of claims 1 to 6, characterized in that the composite tile (14) is produced on a support (1) of a cutting installation, so that at least one cutting step can be realized without handling the composite tile (14) after the production thereof.

8. Method according to one of claims 1 to 7, characterized in that at least one cutting step of the composite tile (14) is realized by sawing.

9. Method according to one of claims 1 to 8, characterized in that at least one cutting step of the composite tile (14) is realized by cutting with a jet of water under pressure or with a laser.

10. Method according to one of claims 2 to 9, characterized in that the precutting step is realized with the same cutting installation (1, 22) as the final cutting step.

11. Method according to one of claims 1 to 10, characterized in that the facing plate (3) is arranged at least substantially horizontally on a support (1) with the external face (6) thereof which is not provided with a facing being directed downwards, a peripheral formwork (4) is realized around the facing plate (3), and in that the counterfacing underlayer (12) is cast and folded in the mold formed of the facing plate (3) which serves as a bottom for the formwork and the peripheral formwork (4).

12. Method according to one of claims 1 to 11, characterized in that the counterfacing underlayer (12) is associated with the facing plate (3) by means of a bonding layer (7) of which the drying time is shorter than the hardening time of the counterfacing underlayer (12).

13. Method according to claim 12, characterized in that the precutting step is realized after the drying of the bonding layer (7).

14. Method according to one of claims 12 and 13, characterized in that use is made of a bonding layer (7) which is constituted of an adhesive comprising a hydraulic binder and water.

15. Method according to one of claims 12 to 14, characterized in that the counterfacing underlayer (12) is in concrete and in that the bonding layer (7) is a layer of slip.

16. Method according to one of claims 1 to 15, characterized in that the counterfacing underlayer (12) is associated with the facing plate (3) through mechanical fixation means (8) which are uniformly distributed in the surface between the facing plate (3) and the counterfacing underlayer (12).

17. Method according to claim 16, characterized in that the mechanical fixation means (8) are formed of anchoring members (8a, 8b) rigidly associated with the anchoring plate (3) before the molding and the association of the counterfacing underlayer (12).

18. Method according to claim 17, characterized in that the anchoring members (8a, 8b) are riveted in boreholes (9) provided in the facing plate (3).

19. Composite coating element such as a pavement, a tile..., containing a facing layer (36) in a noble rigid solid material associated with an counterfacing underlayer (38) in a material able to be implemented by molding and hardening after the implementation thereof, characterized in that the lateral faces (39) of the composite element and the sharp edges (40) of the facing layer (36) have the surface condition and the aspect left by a cutting tool such as a saw, a jet of water under pressure or a laser.

20. Element according to claim 19, characterized in that the counterfacing underlayer (38) is associated with the facing layer (36) by means of at least one fixed anchoring member (8a, 8b) which is anchored in the facing layer (36) and extends within the counterfacing underlayer (38).

21. Element according to claim 20, characterized in that each anchoring member (8a, 8b) is riveted in a corresponding borehole (9) of the facing layer (36).
